Europäisches Patentamt

(19) European Patent Office

Office européen des brevets

(11) Veröffentlichungsnummer: **0 017 839**
A2

# (12) EUROPÄISCHE PATENTANMELDUNG

(21) Anmeldenummer: 80101725.2

(22) Anmeldetag: 01.04.80

(51) Int. Cl.³: **F 24 D 3/00**

(30) Priorität: 20.04.79 DE 2915975

(71) Anmelder: **Hewing, Bernd, Hellstiege 10, D-4434 Ochtrup (DE)**
Anmelder: **Hagemann, Franz-Josef, Eichendorffweg 8, D-4434 Ochtrup (DE)**

(43) Veröffentlichungstag der Anmeldung: 29.10.80
Patentblatt 80/22

(72) Erfinder: **Hewing, Bernd, Hellstiege 10, D-4434 Ochtrup (DE)**
Erfinder: **Hagemann, Franz-Josef, Eichendorffweg 8, D-4434 Ochtrup (DE)**

(74) Vertreter: **Schulze Horn, Stefan et al, Patentanwälte Dipl.-Ing. Stefan Schulze Horn M. SC. Dr. Helmut Hoffmeister Goldstrasse 36, D-4400 Münster (DE)**

(84) Benannte Vertragsstaaten: **AT BE CH FR GB IT LI LU NL SE**

(54) **Vorgefertigtes Einbauelement für Flüssigkeitsflächenheizungen.**

(57) Vorgefertigtes Einbauelement für Flüssigkeitsflächenheizungen, bestehend aus einer Basisplatte (1), mit der Heizrohre (2) verbunden sind, wobei die Basisplatte aus einem flexiblen, wärmeleitenden Material besteht und zusammen mit den Heizrohren als bahnförmiges Gut hergestellt ist.

Die Erfindung betrifft ein vorgefertigtes Einbauelement für Flüssigkeitsflächenheizungen, bestehend aus einer Basisplatte, mit der Heizrohre verbunden sind.

Fußbodenheizungen werden normalerweise so hergestellt, daß beim Bau des Hauses Heizrohre in den Boden eingelegt werden und diese dann mit einer den eigentlichen Fußbodenbelag tragenden Schicht, z.B. einer Betonschicht, abgedeckt werden. Dieses Verfahren ist wegen des hohen Anteils an manueller Arbeit sehr aufwendig und wenig wirtschaftlich.

Zur Vermeidung dieser Nachteile ist bereits eine Verbundplatte mit einer amierten Betonschicht und in der Betonschicht liegenden Heizrohre für eine Flüssigkeitsheizung bekannt, die werksseitig in der Größe eines Zimmerbodens hergestellt wird (DE-GM 78 32 257). Diese Verbundplatte hat jedoch den Nachteil, daß sie wegen ihrer Größe nur schwer handhabbar ist und daß zu ihrem Einbau in jedem Fall ein Kran erforderlich ist.

Es ist Aufgabe der Erfindung, diese Nachteile des Standes der Technik zu vermeiden und ein vorgefertigtes Einbauelement für Flüssigkeitsflächenheizungen zu schaffen, das auf einfache Weise ohne Benutzung eines Krans installiert werden kann. Dadurch soll der Bau einer Flächenheizung besonders wirtschaftlich möglich sein.

2

Diese Aufgabe wird bei einem Einbauelement der eingangs genannten Art erfindungsgemäß dadurch gelöst, daß die Basisplatte aus einem flexiblen, wärmeleitenden Material hergestellt ist und zusammen mit den Heizrohren als bahnförmiges Gut herstellbar ist.

Um eine gleichmäßige Wärmeverteilung zu erreichen, besteht die Basisplatte vorteilhaft aus einer Metallfolie, insbesondere einer Aluminiumfolie.

Eine zuverlässige Verbindung der Heizrohre mit der Basisplatte und eine sichere Lage der Heizrohre werden dadurch erreicht, daß die Heizrohre in tiefgezogenen Nuten der Basisplatte leigen.

Eine gleichmäßige Wärmeverteilung wird weiterhin dadurch erreicht, daß die Heizrohre in einem Abstand von ca. 5 bis 10 cm voneinander angeordnet sind. Um die Wärmeabgabe an den Untergrund zu verringern, weist das Einbauelement vorteilhaft eine Isolierschicht auf seiner Unterseite auf.

Auf seiner Oberseite weist das Einbauelement vorteilhaft eine Kunststoff-Folie auf, so daß die Heizrohre zwischen der Basisplatte und der Kunststoff-Folie eingebettet sind.

Ein Ausführungsbeispiel der Erfindung wird im folgenden anhand der Zeichnung näher erläutert:
Es zeigen:
Figur 1 ein Einbauelement in Draufsicht,
Figur 2 einen Schnitt durch einen Teil des Einbauelementes gemäß Figur 1 und
Figur 3 ein Einbauelement mit einer anderen Anordnung der Heizrohre.

Das Einbauelement besteht im wesentlichen aus einer

Aluminiumfolie als Basisplatte 1, aus den mit dieser Basisplatte 1 verbundenen Heizrohre 2 und einer Kunststoff-Folie 4 auf der Oberseite. An seiner Unterseite weist das Einbauelement eine Isolierschicht 3 auf, die die Wärmeabgabe an den Untergrund verringert.

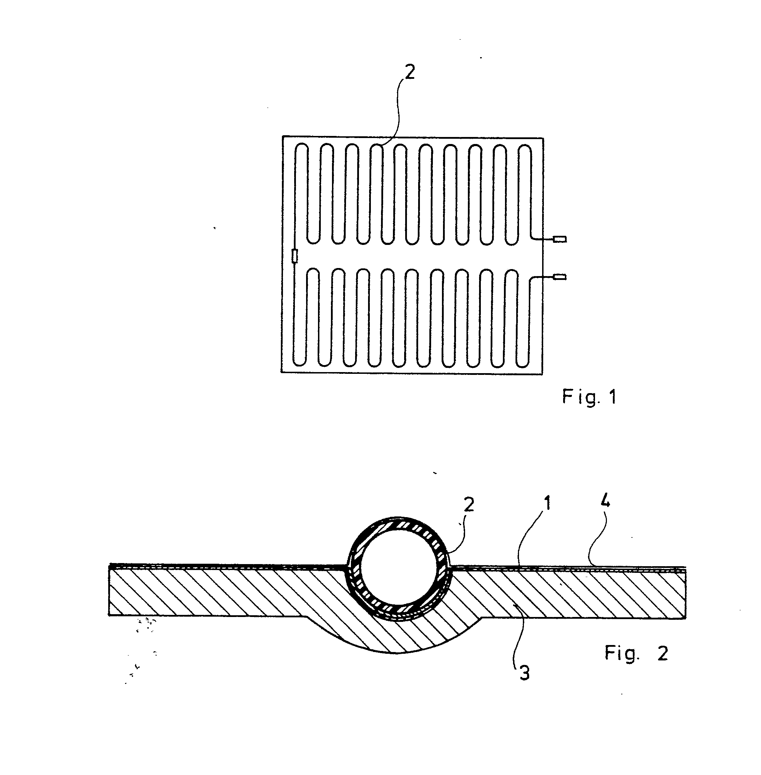

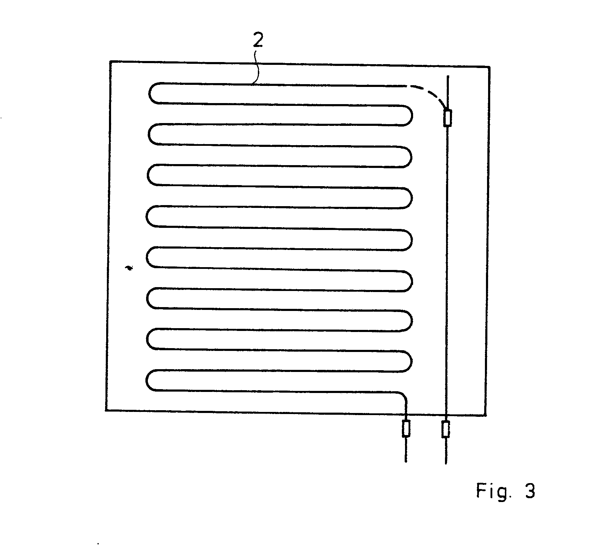

Die Heizrohre 2, die z.B. aus Kunststoff bestehen können, liegen in tiefgezogenen Nuten der Basisplatte 1 und sind im Abstand von ca. 5 bis 10 cm voneinander angeordnet. Die Verbindung zwischen der Basisplatte 1, den Heizrohren 2 und der Kunststoff-Folie 4 kann in einer aus der Verpackungstechnik für in Folien eingesiegelte Tabletten bekannten Weise erfolgen. Innerhalb der Fläche des Einbauelementes liegen gemäß Fig. 1 zwei mäanderförmig angeordnete und zueinander um eine halbe Mäanderperiode verschobene Heizrohre 2. Durch seine Flexibilität kann das Einbauelement bei der Herstellung auf eine Trommel aufgewickelt werden. Zum Einbau wird ein Stück des Einbauelementes von geeigneter Länge von der Trommel abgewickelt und in dem gewünschten Raum ausgelegt. Die Abtrennung erfolgt dabei vorzugsweise an Stellen, an denen die beiden Heizrohrstränge innerhalb des Elementes den geringsten Abstand haben. Die beiden Stränge werden dann an der einen Seite miteinander verbunden und an der anderen Seite mit dem Vorlauf bzw. Rücklauf einer Heizungsanlage verbunden, so daß sich ein geschlossener Flüssigkeitskreislauf ergibt. Für den Fachmann selbstverständlich ist auch eine andere Anordnung der Heizrohre innerhalb der Fläche des Einbauelementes möglich. So kann z.B. gemäß Fig. 3 nur ein Heizrohr mäanderförmig angeordnet sein und ein zweites als Rücklaufleitung am Rand des Einbauelementes verlaufen.

Das erfindungsgemäße Einbauelement ermöglicht auf einfache und wirtschaftliche Weise den Einbau einer Flüssigkeitsflächenheizung. Es ist leicht handhabbar und kann ohne Kran installiert werden. Dadurch, daß es als bahnförmiges, aufrollbares Gut herstellbar ist, wirft es keine Transportprobleme auf und kann jeder Raumgröße leicht angepaßt werden. Insgesamt kann von einer hervorragenden Lösung der anstehenden Probleme gesprochen werden.

Patentansprüche :

1. Vorgefertigtes Einbauelement für Flüssigkeitsflächenheizungen, bestehend aus einer Basisplatte, mit der Heizrohre verbunden sind, dadurch gekennzeichnet, daß die Basisplatte (1) aus einem flexiblen, wärmeleitenden Material hergestellt ist und zusammen mit den Heizrohren (2) als bahnförmiges Gut hergestellt ist.

2. Einbauelement nach Anspruch 1, dadurch gekennzeichnet, daß die Basisplatte (1) eine Metallfolie ist.

3. Einbauelement nach Anspruch 2, dadurch gekennzeichnet, daß die Basisplatte (1) eine Aluminiumfolie ist.

4. Einbauelement nach Anspruch 1 bis 3, dadurch gekennzeichnet, daß die Heizrohre (2) in tiefgezogenen Nuten der Basisplatte (1) liegen.

5. Einbauelement nach Anspruch 1 bis 4, dadurch gekennzeichnet, daß die Heizrohre (2) in einem Abstand von ca. 5 - 10 cm voneinander angeordnet sind.

6. Einbauelement nach Anspruch 1 bis 5, gekennzeichnet durch eine Isolierschicht (3) auf seiner Unterseite.

7. Einbauelement nach Anspruch 1 bis 6, gekennzeichnet durch eine Kunststoff-Folie (4) auf seiner Oberseite.

0017839

1/2

Fig. 1

Fig. 2

Fig. 3